Europäisches Patentamt

European Patent Office

Office européen des brevets

(11) Veröffentlichungsnummer: **0 212 592 B1**

# EUROPÄISCHE PATENTSCHRIFT

(45) Veröffentlichungstag der Patentschrift: 27.03.91

(51) Int. Cl.⁵: **G11B 15/18**

(21) Anmeldenummer: 86111316.5

(22) Anmeldetag: 16.08.86

(54) **Recorder, insbesondere für ein Digitalsignal.**

(30) Priorität: 22.08.85 DE 3529963
24.09.85 DE 3533961

(43) Veröffentlichungstag der Anmeldung:
**04.03.87 Patentblatt 87/10**

(45) Bekanntmachung des Hinweises auf die
Patenterteilung:
**27.03.91 Patentblatt 91/13**

(84) Benannte Vertragsstaaten:
**AT BE CH DE FR GB IT LI LU NL SE**

(56) Entgegenhaltungen:
EP-A- 0 056 823
NL-A- 7 608 812
US-A- 3 911 490
US-A- 4 366 510

PATENT ABSTRACTS OF JAPAN, Band 6, Nr.
81 (E-107)(959), May 19, 1982

(73) Patentinhaber: **Deutsche Thomson-Brandt
GmbH
Hermann-Schwer-Strasse 3 Postfach 1307
W-7730 Villingen-Schwenningen(DE)**

(72) Erfinder: **Wippermann, Horst, Dipl.-Ing.
Am Wall 64
W-3017 Pattensen(DE)**
Erfinder: **Scharn, Günter, Ing. (grad.)
Süllbergstrasse 18
W-3001 Bennigsen(DE)**

(74) Vertreter: **Einsel, Robert, Dipl.-Ing.
Deutsche Thomson-Brandt GmbH Patent-
und Lizenzabteilung Göttinger Chaussee 76
W-3000 Hannover 91(DE)**

## Beschreibung

Die Erfindung geht aus von einem Magnetbandgerät gemäß dem Oberbegriff des Anspruchs 1. Ein derartiges Magnetbandgerät ist beschrieben in der älteren EP A3 0 197 333.

Nach einem derartigen Verfahren arbeiten die sogenannte Schrägspurabtastung, die Querspuraufzeichnung sowie eine matrixartige Aufzeichnung, bei der auf dem Band aufeinanderfolgende Blöcke je mit einer Vielzahl von parallel zur Bandkante verlaufenden Spuren geschrieben werden.

Bei derartigen Aufzeichnungsverfahren, insbesondere bei der Schrägspuraufzeichnung, ergeben sich Schwierigkeiten, wenn für ein Standbild, eine Zeitraffung, eine Zeitdehnung oder sonstige Trickmodi die Längsgeschwindigkeit des Bandes von der Normalgeschwindigkeit abweicht. Dann ändert sich nämlich die Schräglage der von den Köpfen zurückgelegten Spuren, so daß die Köpfe nicht mehr den bei Normalgeschwindigkeit geschrieben Spuren folgen können.

Es ist bekannt, in solchen Fällen mit einer sogenannten Spurnachregelung (DTF-Dynamic Track Following) die Köpfe an der Kopftrommel so nachzusteuern, daß sie den aufgezeichneten Spuren folgen. Diese Lösung erfordert aber die zusätzliche Aufnahme von Spurmarkiersignalen und elektromechanische Wandler zur Steuerung der Lage der Köpfe am Kopfrad.

Der Erfindung liegt die Aufgabe zugrunde, einen Recorder für die beschriebenen Aufzeichnungsarten so auszubilden, daß auch bei Sondermodi eine einwandfreie Spurhaltung ohne automatische Spurnachführung und ein größerer Freiheitsgrad in der Lage und in dem Abstand der aufgezeichneten Spuren erreicht werden.

Diese Aufgabe wird durch die im Anspruch 1 beschriebene Erfindung gelöst. Vorteilhafte Weiterbildungen der Erfindung sind in den Unteransprüchen beschrieben.

Es ist auch ein Recorder bekannt (Patent Abstracts of Japan No 57-17283), bei dem der Längsantrieb des Bandes durch einen Schrittmotor gesteuert wird. Dieser Schrittmotor dient jedoch dazu, bei unterschiedlichen Geschwindigkeiten Störungen im Bild zu verringern. Außerdem sind dort nicht um eine Spurbreite geometrisch gegeneinander versetzte Magnetköpfe vorgesehen, die bei stehendem Band nacheinander zwei getrennte Spuren abtasten.

Es ist auch ein Recorder für Schrägspuraufzeichnung bekannt (US-PS 3 911 490), bei dem bei einer Schrägspurabtastung das Band in seiner Längsrichtung ruckweise transportiert wird. Der Antrieb für diesen Transport erfolgt jedoch mit einer gesteuerten Hydraulik und nicht mit einem Schrittmotor. Auch die um eine Spurbreite geometrisch gegeneinander versetzten Magnetköpfe sind dort nicht vorgesehen.

Zeiten, in denen kein Signal abgetastet wird, durch die aus den Speichern abgerufenen Signalanteile aufgefüllt.

Das Magnetband kann durch den Schrittmotor bei der Aufnahme so angetrieben werden, daß jeweils zwischen aufeinanderfolgenden Spuren Spuren ausgelassen werden, also Lücken entstehen. Das gibt die Möglichkeit, das aufgezeichnete Signal zu lesen, nach bestimmten Kriterien aufzubereiten, z.B. zu korrigieren, zu modifizieren, mit Zusatzsignalen zu versehen oder in der Schärfe zu verbessern, und dann in der modifizierten Form in den genannten Lücken wieder aufzuzeichnen. Bei der Wiedergabe kann dann die Steuerung des Antriebs so erfolgen, daß nur die Spuren mit dem aufbereiteten Signal abgetastet werden.

Schrittmotore, die jeweils bei einem Impuls eine definierte Drehbewegung ausführen, sind bekannt. Vorzugsweise wird für den Antrieb ein sogenannter Direktantrieb verwendet. Das bedeutet, daß die Welle des Schrittmotors als sogenannter Capstan unmittelbar auf das Magnetband einwirkt, z.B. zusammen mit einer sogenannten Gummiandrucksrolle. Bei einem erfindungsgemäßen Recorder mit Schrägspuraufzeichnung wird vorzugsweise die Lage der Schrägspuren nach folgenden Gesichtspunkten bemessen. Es sei angenommen, daß auf einem Magnetband, welches mit einem handelsüblichen VHS-Videorecorder bei normaler konstanter Längsgeschwindigkeit des Magnetbandes beschrieben wurde, die Schrägsspuren auf dem Band zur Bandkante einen Winkel $\phi$ bilden. Dieser Winkel $\phi$ ist von der Längsgeschwindigkeit abhängig. Die Spuren können bei der Wiedergabe nur dann genau eingehalten werden, wenn die Längsgeschwindigkeit wieder ihren Normalwert hat. Der erfindungsgemäße Recorder wird nun durch Wahl der Schräglage des Magnetbandes zur Kopftrommel so bemessen, daß die Köpfe bei stehendem Band auf dem Band Spuren abtasten, die um den genannten Winkel $\phi$ schräg zur Bandkante liegen. Das bedeutet, daß ein mit einem VHS-Recorder bespieltes Band mit einem erfindungsgemäßen Recorder bei genauer Spureinhaltung abtastbar ist. Da bei dem erfindungsgemäßen Recorder der Winkel zwischen den abgetasteten Spuren und der Bandkante bei Aufnahme und Wiedergabe stets gleich ist, kann auch ein mit dem erfindungsgemäßen Recorder bespieltes Band mit einem VHS-Recorder abgespielt werden. Der erfindungsgemäße Recorder ist dann in vorteilhafter Weise in beiden Richtungen mit einem VHS-Recorder kompatibel. Dabei ist die Schräglage des Bandes zur Kopftrommel bei beiden Recordern unterschiedlich, weil der genannte Winkel $\phi$ zwischen den Spuren und der Bandkante bei dem VHS-Recorder bei der Normal-Längsgeschwindigkeit und bei dem erfindungsgemäßen Recorder bei der Längsgeschwindigkeit null, also stehendem Band geschrieben, wird.

Es ist möglich, zusätzlich zu dem erfindungsgemäßen Antrieb einen zweiten, wahlweise einschaltbaren Antrieb für einen kontinuierlichen Bandtransport vorzusehen. Dies kann zweckmäßig sein, um z.B. wahlweise in herkömmlicher Weise mit kontinuierlichem Antrieb bespielte Bänder abspielen zu können.

Die Erfindung wird anhand der Zeichnung näher erläutert. Darin zeigen

Fig. 1  ein Magnetband mit Schrägspuren zur Erläuterung des erfindungsgemäßen Antriebs und

Fig. 2  ein Blockschaltbild für den erfindungsgemäßen Antrieb und

Fig. 3  eine Weiterbildung der Erfindung.

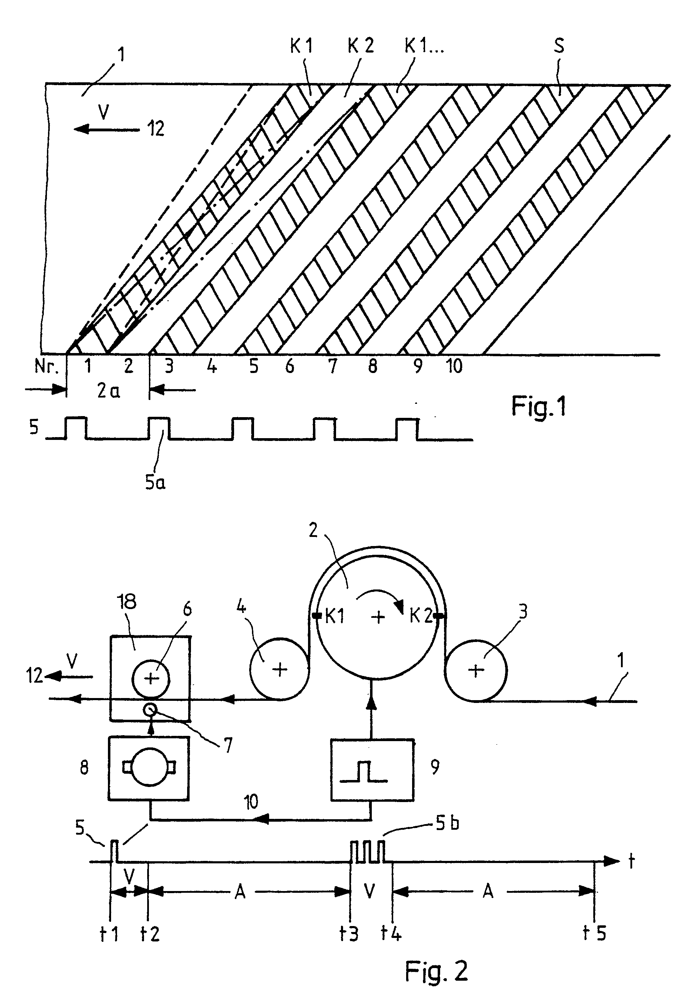

Fig. 1 zeigt ein Magnetband 1, auf dem Schrägspuren S mit den Nummern 1 - 10 geschrieben sind. Der Winkel zwischen der Richtung der Spuren S und der Kante des Magnetbandes 1 ist in der Praxis kleiner dargestellt und beträgt ca 7°. Bei stenendem Magnetband 1, also der Längsgeschwindigkeit V = 0, wird zunächst die Spur Nr. 1 mit dem Magnetkopf K1 und anschlie ßend die Spur Nr. 2 mit dem Kopf K2 geschrieben. Die Köpfe K1, K2 sind diametral einander gegenüber auf einem rotierendem Kopfrad 2 (Fig. 2) angeordnet. Der Versatz der beiden Spuren Nr. 1 und 2 um den Wert a wird dadurch erreicht, daß die Magnetköpfe K1, K2 auf der Kopftrommel quer zur Spurrichtung um den Betrag a gegeneinander versetzt angeordnet sind. Der Versatz erfolgt also nicht wie bei üblichen Videorecordern mit Schrägspuraufzeichnung durch die wirksame Längsgeschwindigkeit V. Am Ende der Abtastung der Spur Nr. 2 mit dem Kopf K2 wird das Band 1 durch den Impuls 5a in Richtung 12 ruckartig um den Betrag 2a weiterbewegt. Während dieser Bewegung erfolgt keine Abtastung der Spuren S. Nach dieser Bewegung wird die Abtastung der Spuren fortgesetzt. Der Kopf K1 tastet jetzt die Spur Nr. 3 und anschließend der Kopf K2 die Spur Nr. 4 ab. Auch diese Abtastung erfolgt wieder bei stehendem Band 1. Durch die Impulse 5 wird also das Magnetband 1 ruckweise so verschoben, daß nacheinander der Kopf K1 die schraffierten Spuren Nr. 1,3,5,7,9 und der Kopf K2 die nicht schraffierten Spuren Nr. 2,4,6,8,10 abtastet. Die Schräglage der Spuren S zur Kante des Bandes 1 ist festgelegt durch die geometrische Lage des Bandes 1 relativ zur Kopftrommel 2. Sie ist stets gleich, da während der Abtastung die Längsgeschwindigkeit stets null ist, unabhängig davon, um welchen Betrag, z.B. 2a oder ein Vielfaches davon, das Band 1 zwischen den Abtastungen weitertransportiert wird. Eine Abtastung entlang der gestrichelt dargestellten Spur mit einem größeren Winkel zur Bandkante oder entsprechend der strichpunktierten Spur mit einem geringeren Winkel zur Bandkante, die von den geschriebenen Spuren in der Winkellage abweichen und bei üblichen Recordern mit konstanter Längsgeschwindigkeit des Bandes 1 auftreten, können also nicht mehr wirksam werden.

In Fig. 2 ist das Magnetband 1 mittels Rollen 3, 4 um die die Köpfe K1, K2 tragende Kopftrommel 2 im Sinne einer Schrägspurabtastung herumgeführt. Das Band 1 wird von dem Antrieb 18 in Richtung 12 angetrieben. Der Antrieb 18 enthält eine Gummiandruckrolle 6 sowie den Capstan 7. Der Capstan 7 ist unmittelbar die Welle des Schrittmotors 8, der von der Steuereinheit 9 über die Leitung 10 mit den Impulsen 5 angesteuert wird. Die Einheit 9 steuert sowohl die Rotationsbewegung der Kopftrommel 2 als auch den Schrittmotor 8, weil diese beiden Steuerungen in einer definierten zeitlichen Beziehung zueinander stehen. Während der Abtastung der Spuren, zum Schreiben oder Lesen, stehen der Motor 8 und der Capstan 7 still. Jeweils zwischen den Abtastungen liefert die Steuerschaltung 9 über die Leitung 10 einen Impuls 5 auf den Schrittmotor 8, der das Magnetband 1 um einen definierten Betrag, z.B, 2a oder ein Vielfaches davon, weitertransportiert. Ein Impuls 5 bewirkt während der Zeit V von t1 - t2 bei unterbrochener Abtastung der Spuren eine Längsbewegung des Bandes 1 in der Richtung 12. In der Zeit A von t2 - t3 erfolgt die Abtastung mit den Köpfen K1, K2, während die Längsbewegung des Magnetbandes 1 null ist. Während der Zeit t3 - t4 werden dem Schrittmotor 8 drei Impulse 5b zugeführt, so daß das Magnetband 1 um den dreifachen Betrag wie bei t1 - t2 in Richtung 12 transportiert wird. Durch die drei Impulse 5b würde in Fig. 1 die Abtastung der Spuren Nr. 1 und 2 mit den Köpfen K1 und K2 verschoben auf eine Abtastung der Spuren Nr. 7 und 8, so daß die dazwischen liegenden Spuren Nr. 3 bis 6 übersprungen werden. Dies kann sinnvoll sein, um ein anderes Signal oder das modifizierte Signal der Spuren Nr. 1 und 2 einzufügen.

Der Schrittmotor 8 ist so ausgebildet, daß er den Capstan 7 in beide Drehrichtungen betätigen kann, also das Band 1 in Richtung 12 und auch in der Gegenrichtung ruckweise transportiert werden kann. Dadurch werden die bei Videorecordern bekannten sogenannten Trickmodi ermöglicht. Bei einer Standbildwiedergabe wird der Motor 8 gar nicht angesteuert, so daß die Köpfe immer die selben Spuren abtasten. Bei einer Zeitlupe wird der Motor 8 so angesteuert, daß die Köpfe dieselben Spuren mehrmals abtasten. Die Frequenz der Impulse 5 ist dann entsprechend kleiner. Bei einer Zeitraffung ist die Anzahl der Impulse 5 während des Bandtransports entsprechend größer, wie in Fig. 2 für den Zeitraum t3 - t4 dargestellt. Auf ähnliche Weise ist auch eine Rückwärtsbewegung möglich, indem die Impulse 5 den Schrittmotor 8 in der entgegengesetzten Richtung antreiben. Zwischen dem Antrieb 18, der eine ruckweise Bewegung des Magnetbandes 1 in Richtung 12 ausführt, und dem Wickelteller kann ein mechanisches Integrierglied vorgesehen sein, das diese ruckartige Bewegung ausgleicht, z.B. in Form eines Bandpuffers oder einer Bandschlaufe. Dadurch kann erreicht werden, daß sich die ruckartige Bewegung auf den Wickelteller nicht auswirkt und am Wikkelteller eine kontinuierliche Bandbewegung mit konstanter Geschwindigkeit vorliegt. Die Erfindung ist auch anwendbar für ein Kopfrad mit nur einem Kopf, wobei vorzugsweise der Umschlingungswinkel größer gewählt wird. Der Bandtransport erfolgt dann jeweils in der Zeit, in der der einzige Kopf mit dem Magnetband nicht in Kontakt ist.

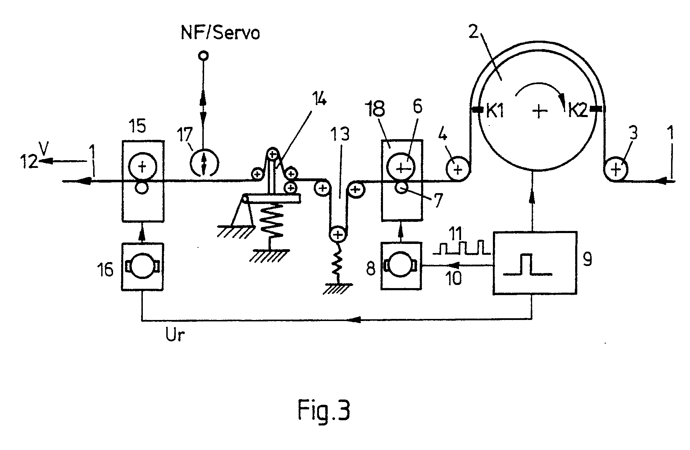

Durch eine Weiterbildung der Erfindung gemäß Fig. 3 wird die ruckweise Bewegung des Bandes mit Abtastung bei ruhendem Band kombiniert mit einer Abtastung bei konstanter Band-Längsgeschwindigkeit. Diese Abtastung erfolgt vorzugsweise mit einem feststehendem Magnetkopf entlang einer parallel zur Bandkante verlaufenden sogenannten Längsspur. Im Bereich des Bandes mit konstanter Längsgeschwindigkeit kann aber auch eine zweite rotierende Kopftrommel liegen, mit der das Band entlang Schrägspuren, Querspuren oder matrixartig geschriebene Spuren bei konstanter Längsgeschwindigkeit abgetastet wird.

In Fig. 3 ist das Magnetband mittels Umlenkrollen 3, 4 um die rotierende Kopftrommel 2 mit den Köpfe K1 und K2 herumgeführt. Die Köpfe K1 und K2 bewirken mit hoher Abtastgeschwindigkeit eine Abtastung des Bandes 1 entlang Schrägspuren, Querspuren oder matrixartig geschriebenen Spuren gemäß der älteren Patentanmeldung P 35 09 584. Der Antrieb des Bandes 1 in Längsrichtung 12 erfolgt mit dem Antrieb 5, der eine Gummiandruckrolle 6 und einen Capstan 7 aufweist und von dem Schrittmotor 8 betätigt wird. Der Schrittmotor 8 wird von der Steuerschaltung 9 durch Impulse 11 betätigt. Der Capstan 7 ist vorzugsweise unmittelbar die Welle des Schrittmotors 8. Der Antrieb erfolgt so, daß jeweils während der Abtastung der Spuren das Band 1 in seiner Längsrichtung 12 nicht transportiert wird, also stillsteht, und daß der ruckweise Vorschub des Bandes 1 in Richtung 12 jeweils zwischen zwei Abtastperioden erfolgt. Unter Abtastung wird sowohl die Aufnahme (Schreiben) als auch die Wiedergabe (Lesen) verstanden.

Das Magnetband 1 gelangt über die als Bandpuffer dienende Schlaufe 13 und die zur Konstanthaltung des Bandzuges dienende Einrichtung 14 zu dem Antrieb 15, der von dem Motor 16 kontinuierlich angetrieben wird. Der Motor wird von der Steuerschaltung 9 durch eine Regelspannung Ur in bekannter Weise geregelt. Dir ruckartige Bewegung des Bandes 1 im Bereich von vor der Umlenkrolle 3 bis zum Ausgang des Antriebes 18 wird durch den Bandpuffer 13 ausgeglichen. Am Ausgang der Einrichtung 14 hat das Band die durch den Antrieb 15 bewirkte konstante Längsgeschwindigkeit V in Richtung 12 von ca. 20 mm/s. In diesem Bereich ist der Magnetkopf 17 vorgesehen, der eine parallel zur Bandkante verlaufende Längsspur mit konstanter Abtastgeschwindigkeit abtastet. Der Magnetkopf 17 dient z.B. zur Aufzeichnung und Wiedergabe des NF-Tonsignals und/oder eines Steuersignals für eine Servoregelung. Mit dem Kopf 17 können auch weitere Signale wie z.B. Stereo-Tonsignale, Pilotträger für einen Zeitfehlerausgleich und dgl. aufgezeichnet werden.

In dem Bereich zwischen der Einrichtung 14 und dem Antrieb 15 mit konstanter Band-Längsgeschwindigkeit kann auch eine zweite rotierende Kopftrommel 2 vorgesehen sein, um z.B. eine Schrägspuraufzeichnung mit konstanter Band-Längsgeschwindigkeit zu ermöglichen.

Der Bandpuffer 13 ist so bemessen, daß jeweils während des Stillstandes des Antriebes 18 dem Bandpuffer 13 durch den Antrieb 15 bei abnehmender gepufferter Bandlänge Band entnommen werden kann. Der Bandpuffer 13 wird also jeweils bei nicht betätigtem Antrieb 18 und stehendem Band 1 und dabei erfolgter Abtastung durch die Köpfe K1 und K2 durch den Antrieb 15 kontinuierlich geleert und jeweils zwischen zwei Abtastungen bei betätigtem Antrieb 18 schnell wieder aufgefüllt. Am Ausgang des Bandpuffers 13 ist die Band-Längsgeschwindigkeit V in Richtung 12 konstant. Der Antrieb 18, gesteuert durch die Impulse 11, und der Antrieb 15, gesteuert durch Ur, sind so miteinander synchronisiert, daß der Bandpuffer 13 immer eine genügende Bandlänge beinhaltet.

## Ansprüche

1. Magnetbandgerät mit digitaler Signalaufzeichnung, bei dem mit einem rotierenden, mindestens zwei Magnetköpfe (K1, K2) aufweisenden Kopfrad (2) auf einem Band (1) relativ zur Bandlänge kurze Spuren (S) nebeneinander geschrieben werden und das Band (1) durch einen Antrieb (5) in seiner Längsrichtung (12) tranportiert wird, **dadurch gekennzeichnet, daß** die Aufzeichnung und Abtastung der Spuren (S) durch gegeneinander um eine Spurbreite geometrisch versetzte Magnetköpfe (K1, K2) bei stehendem Band (1) erfolgt und der Antrieb (5) einen jeweils zwischen Spurpaarabtastungen betätigten Schrittmotor (8) enthält.

**2.** Magnetbandgerät Anspruch 1, **dadurch gekennzeichnet**, daß der Bandtransport nach dem Abtasten einer Spur um einen solchen Betrag (n. 2a) erfolgt, daß ein oder mehrere Spurparen (S) übersprungen werden.

**3.** Magnetbandgerät nach Anspruch 1, **dadurch gekennzeichnet**, daß die Zahl der dem Motor (8) zwischen zwei Spurpaarabtastungen zugeführten Impulse (5) veränderbar ist.

**4.** Magnetbandgerät nach Anspruch 1, **dadurch gekennzeichnet**, daß nach dem Prinzip des Direktantriebs die Welle des Motors (8) unmittelbar die am Band (1) angreifende, den Antrieb in Längsrichtung bewirkende Weile (7) bildet.

**5.** Magnetbandgerät nach Anspruch 1, **dadurch gekennzeichnet**, daß zwischen dem Antrieb (5) und dem Wickelteller für das Band (1) ein Integrierglied für den ruckartigen Antrieb liegt, so daß am Wickelteller eine kontinuierliche Bandbewegung besteht.

**6.** Magnetbandgerät nach Anspruch 1, **dadurch gekennzeichnet**, daß bei Schrägspuraufzeichnung der Winkel ($\phi$) zwischen den bei Bandstillstand geschriebenen Spuren und der Bandkante gleich dem entsprechenden Winkel zwischen geschriebenen Spuren auf dem Band und der Bandkante eines mit einem VHS-Videorecorder mit normaler Aufnahme Wiedergabe-Längsgeschwindigkeit geschriebenen Magnetbandes ist.

**7.** Magnetbandgerät nach Anspruch 1, **dadurch gekennzeichnet**, daß auf der Auslaufseite des ersten Antriebs (5) ein zweiter Antrieb (15) für die Abtastung einer Spur mit konstanter Längsgeschwindigkeit (V) liegt.

**8.** Magnetbandgerät nach Anspruch 1, **dadurch gekennzeichnet**, daß zwischen den beiden Antrieben (5, 15) ein den ruckweisen Bandtransport des ersten Antriebs (5) ausgleichender Bandpuffer (13) liegt.

**9.** Magnetbandgerät nach Anspruch 8, **dadurch gekennzeichnet**, daß der Bandpuffer (13) durch eine Bandschlaufe gebildet ist.

**10.** Magnetbandgerät nach Anspruch 7, **dadurch gekennzeichnet**, daß im Bandbereich mit konstanter Längsgeschwindigkeit eine zweite rotierende Kopftrommel liegt.

**Claims**

**1.** A magnetic tape device having digital signal recording in which tracks (S) short relative to the tape length are written adjacent each other on a tape (1) by a rotating head wheel (2), which has at least two magnetic heads (K1, K2), and the tape (1) is transported by a drive (5) in its longitudinal direction (12), **characterised in that** the recording and scanning of the tracks (S) by magnetic heads (K1, K2), offset geometrically from each other by a track width, takes place when the tape (1) is stationary and the drive (5) contains a stepping motor actuated in each case between track pair scans.

**2.** A magnetic tape device according to claim 1, **characterised in that** tape transport takes place after scanning a track by such an amount (n. 2a), that one or more track pairs (S) are skipped over.

**3.** A magnetic tape device according to claim 1, **characterised in that** the number of the pulses (5) supplied to the motor (8) between two track pair scans is variable.

**4.** A magnetic tape device according to claim 1, **characterised in that** according to the principle of the direct drive the shaft of the motor (8) directly forms the shaft (7), which engages the tape (1) and causes drive in a longitudinal direction.

**5.** A magnetic tape device according to claim 1, **characterised in that** between the drive (5) and the spindle for the tape (1) there lies an integrating element for the jerky drive so that a continuous tape movement exists at the spindle.

**6.** A magnetic tape device according to claim 1, **characterised in that** with helical track recording the angle ($\phi$) between the tracks written when the tape is at a standstill and the tape edge is the same as the corresponding angle between written tracks on the tape and the tape edge of a magnetic tape written by a VHS video recorder at normal longitudinal recording/playback speed.

**7.** A magnetic tape device according to claim 1, **characterised in that** a second drive (15) for scanning a track at constant longitudinal speed (V) lies on the outlet side of the first drive (5).

**8.** A magnetic tape device according to claim 1,

characterised in that between the two drives (5, 15) lies a tape buffer (13) compensating for the jerky tape transport of the first drive (5).

9. A magnetic tape device according to claim 8, characterised in that the tape buffer (13) is formed by a tape loop.

10. A magnetic tape device according to claim 7, characterised in that a second rotating head drum lies in the tape region with constant longitudinal speed.

**Revendications**

1. Appareil d'enregistrement sur bande magnétique à enregistrement de signaux numérique dans lequel des pistes (S), qui sont courtes par rapport à la longueur de la bande, sont enregistrées sur une bande (1), les unes à côté des autres, avec une roue de têtes (2) rotative qui présente au moins deux têtes magnétiques (K1, K2) et dans lequel la bande (1) est transportée par une commande (5) dans la direction de sa longueur (12), **caractérisé en ce** que l'enregistrement et le balayage des pistes (S) sont réalisés, la bande (1) étant immobile, par des têtes magnétiques (K1, K2) décalées l'uen par rapport à l'autre géométriquement d'une largeur de piste et que la commande (5) contient un moteur pas à pas (8) actionné respectivement entre les balayages de paires de pistes.

2. Appareil d'enregistrement sur bande magnétique selon la revendication 1, **caractérisé en ce** que le transport de la bande se fait après le balayage d'une piste d'une valeur (n.2a) telle qu'une ou plusieurs paires de pistes (S) sont sautées.

3. Appareil d'enregistrement sur bande magnétique selon la revendication 1, **caractérisé en ce** que le nombre des impulsions (5) amenées au moteur (8) après deux balayages de paires de pistes est variable.

4. Appareil d'enregistrement sur bande magnétique, **caractérisé en ce** que, selon le principe de la commande directe, l'arbre du moteur (8) forme directement l'arbre (7) qui agit sur la bande (1) et qui entraîne la commande dans le sens de la longueur.

5. Appareil d'enregistrement sur bande magnétique selon la revendication 1, **caractérisé en ce** qu'un organe d'intégration pour la commande par saccades se situe entre la commande (5) et le plateau d'enroulement de la bande (1) si bien qu'il y a un déplacement continu de la bande sur le plateau d'enroulement.

6. Appareil d'enregistrement sur bande magnétique selon la revendication 1, **caractérisé en ce** que, lors de l'enregistrement hélicoïdal, l'angle ($\phi$) entre les pistes enregistrées lorsque la bande est à l'arrêt et le bord de la bande est égal à l'angle correspondant entre les pistes décrites sur la bande et le bord de la bande d'une bande magnétique enregistrée avec un magnétoscope VHS à vitesse longitudinale enregistrement/reproduction normale.

7. Appareil d'enregistrement sur bande magnétique selon la revendication 1, **caractérisé en ce** qu'une seconde commande (15) pour le balayage d'une piste à vitesse longitudinale (V) constante se trouve sur le côté de sortie de la première commande (5).

8. Appareil d'enregistrement sur bande magnétique selon la revendication 1, **caractérisé en ce** qu un compensateur de bande (13) qui compense le transport par saccades de la bande de la première commande (5) se trouve entre les deux commandes (5, 15).

9. Appareil d'enregistrement sur bande magnétique selon la revendication 8, **caractérisé en ce** que le compensateur de bande (13) est formé par une boucle de bande.

10. Appareil d'enregistrement sur bande magnétique selon la revendication 7, **caractérisé en ce** qu'un second tambour de têtes rotatif se trouve dans la zone de la bande à vitesse longitudinale constante.

Fig.1

Fig. 2

Fig.3